# EUROPÄISCHE PATENTSCHRIFT

(11) **EP 3 167 245 B1**
(45) Veröffentlichungstag und Bekanntmachung des Hinweises auf die Patenterteilung: **24.01.2018**
(21) Anmeldenummer: 15736402.7
(22) Anmeldetag: 11.07.2015
(51) Int. Cl.: G01C 21/20, G01C 21/32, G01C 21/36

(54) **VERFAHREN ZUR NAVIGATION EINES BENUTZERS ZWISCHEN EINER ERSTEN POSITION INNERHALB EINES GEBÄUDES UND EINER ZWEITEN POSITION**
METHOD FOR NAVIGATING A USER BETWEEN A FIRST POSITION INSIDE A BUILDING AND A SECOND POSITION
PROCÉDÉ PERMETTANT LA NAVIGATION D'UN UTILISATEUR ENTRE UNE PREMIÈRE POSITION À L'INTÉRIEUR D'UN BÂTIMENT ET UNE DEUXIÈME POSITION

(30) Priorität: 06.09.2014 DE 102014013208
(43) Veröffentlichungstag der Anmeldung: 17.05.2017
(73) Patentinhaber: Audi AG, 85045 Ingolstadt (DE)
(72) Erfinder: ALTINGER, Harald, 85049 Gerolfing (DE); SCHULLER, Florian, 85737 Ismaning (DE)
(86) Internationale Anmeldenummer: PCT/EP2015/001424
(87) Internationale Veröffentlichungsnummer: WO 2016/034258

(56) Entgegenhaltungen:
- WO-A2-2010/051510
- DE-A1-102014 013 207
- US-A1- 2009 058 685
- US-A1- 2012 316 774

## Beschreibung

Die Erfindung betrifft ein Verfahren zur Navigation eines Benutzers zwischen einer ersten Position innerhalb eines Gebäudes, wobei die erste Position eine Parkposition eines in dem Gebäude geparkten Kraftfahrzeugs ist, und einer zweiten Position, oder umgekehrt.

Es ist bekannt, vermittels mobiler Kommunikationsgeräte, wie z. B. Handys, Smartphones und dergleichen, benutzerseitige Navigationsvorgänge zwischen zwei unterschiedlichen Positionen, d. h. einer Ausgangsposition und einer Zielposition, zu realisieren. Es ist hierfür insbesondere erforderlich, dass das den jeweiligen Navigationsvorgang realisierende mobile Kommunikationsgerät mit einem Daten- bzw. Kommunikationsnetzwerk, typischerweise einem Mobilfunknetz, verbunden ist, um eine Lokalisierung bzw. Positionierung des Benutzers in einer kartographischen Umgebung und somit einen Navigationsvorgang zwischen den beiden Positionen umzusetzen.

Bekanntermaßen gibt es, insbesondere unterhalb der Erdoberfläche liegende Gebäudebereiche, wie z. B. Tiefgaragen, in welchen ein Netzempfang und entsprechend eine Verbindung eines mobilen Kommunikationsgeräts mit einem Daten- bzw. Kommunikationsnetzwerk nicht oder nur eingeschränkt möglich ist. Mithin kann ein Navigationsvorgang, z. B. ausgehend von einem in einer Tiefgarage geparkten Kraftfahrzeug, nicht oder nur eingeschränkt realisiert werden.

Die Navigation kann zudem erschwert werden, wenn zu entsprechenden Gebäuden bzw. Gebäudebereichen, aus welchen bzw. in welche navigiert werden soll, keine kartographischen Daten, kurz Kartendaten, vorliegen.

Aus DE 10 2014 007 794 A1 ist ein Verfahren zum Betreiben eines Fahrzeugleitsystems bekannt, wobei zumindest in Bereichen ohne verfügbares satellitengestütztes Navigationssignal eine Positionsbestimmung des Fahrzeugs mittels einer Koppelnavigation anhand einer Bewegungsrichtung des Fahrzeugs und einer Geschwindigkeit des Fahrzeugs durchgeführt wird.

Aus US 2009/0 251 333 A1 ist ein Verfahren bekannt, bei dem eine Bildaufnahmeeinrichtung beim Einfahren in ein Parkhaus Bilder der Umgebung in Fahrtrichtung aufzeichnet. Ein Benutzer des Kraftfahrzeugs kann sich die Bilder beispielsweise auf einem Mobiltelefon anzeigen lassen, um das Kraftfahrzeug wieder zu finden.

Aus US 2009/0 058 685 A1 ist ein mobiles Kommunikationsgerät bekannt, das einen Benutzer zu seinem geparkten Fahrzeug führen kann. Es ist sonach möglich mittels Bildern der Umgebung des geparkten Fahrzeugs und lokalen Karteninformationen den Benutzer zurück zu seinem Kraftfahrzeug zu führen.

DE 199 23 750 A1 beschreibt eine Vorrichtung und ein Verfahren, mit deren Hilfe ein Fahrer sein geparktes Fahrzeug wieder auffinden kann. Dazu wird beim Parkvorgang die Information über den aktuellen Standort des Kraftfahrzeugs von einem Navigationssystem des Kraftfahrzeugs auf ein mobiles Gerät, das der Fahrer mit sich führen kann, gespeichert. Der Fahrer kann sich sonach auf dem mobilen Gerät den Standort des Kraftfahrzeugs anzeigen lassen.

Aus DE 10 2009 006 471 A1 ist ein Verfahren zum Betreiben einer Navigationseinrichtung eines Kraftfahrzeugs bekannt, wobei die Navigationseinrichtung die Position und/oder die Fahrroute des Kraftfahrzeugs mithilfe von kraftfahrzeugseitig vorhandenen geographischen Basisdaten bestimmt.

Ferner ist aus US 2008/0 059 199 A1 ein Verfahren bekannt, bei dem Hinweisschilder erfasst werden können, um zusammen mit einer Spracheingabe eines Benutzers eine Routenführung durchzuführen.

Dokument US 2012/316774 A1 offenbart ein Verfahren zur Navigation des Benutzers zurück zu einer zuvor bekannten Position, nämlich der Parkposition des Kraftfahrzeugs. Dabei wird bei der Bewegung des Benutzers, der sich vom Kraftfahrzeug entfernt, eine Route aufgezeichnet, auf der er anschließend zum Kraftfahrzeug zurückgeführt werden kann.

Der Erfindung liegt die Aufgabe zugrunde, ein verbessertes Verfahren zur Navigation eines Benutzers zwischen einer ersten Position innerhalb eines Gebäudes und einer zweiten Position, oder umgekehrt, anzugeben.

Die Aufgabe wird durch ein Verfahren gemäß Anspruch 1 gelöst.

Das Verfahren dient im Allgemeinen der Navigation eines Benutzers zwischen einer ersten Position und einer zweiten Position, oder umgekehrt. Je nachdem, ob die erste oder die zweite Position als Ausgangspunkt dient, kann entweder die zweite Position oder die erste Position als Zielposition bezeichnet bzw. erachtet werden.

Die erste Position befindet sich in einem Gebäude bzw. in einem Gebäudebereich , d. h. in einem Teil eines Gebäudes. Insbesondere befindet sich die erste Position dabei in einem Gebäudebereich, in welchem keine Netzabdeckung und somit kein Netzempfang für ein benutzerseitiges mobiles Kommunikationsgerät, nachfolgend kurz Kommunikationsgerät, gegeben ist. Das Kommunikationsgerät ist in der ersten Position gegebenenfalls nicht oder merklich eingeschränkt mit einem Daten- bzw. Kommunikationsnetzwerk, d. h. insbesondere einem Mobilfunknetz, verbindbar oder verbunden. Eine entsprechende erste Position kann sonach z. B. in einem unterhalb der Erdoberfläche liegenden Gebäudebereich liegen. Beispielsweise kann es sich bei einem solchen Gebäudebereich um ein Untergeschoss eines Parkhauses oder um ein Geschoss einer Tiefgarage handeln. Typischerweise liegen zu dem die erste Position beinhaltenden Gebäude bzw. Gebäudebereich keine kartographischen Daten, kurz Kartendaten, vor. Wie sich im Weiteren ergibt, können entsprechende Kartendaten jedoch kraftfahrzeugseitig erstellt werden.

Die zweite Position kann sich ebenso in einem Gebäude bzw. in einem Gebäudebereich, d. h. in einem Teil eines Gebäudes, befinden. Die zweite Position kann sich jedoch auch außerhalb des oder eines Gebäudes befinden. Sofern sich die zweite Position ebenso in einem Gebäude bzw. in einem Gebäudebereich befindet, kann es sich um einen solchen Gebäudebereich handeln, in welchem eine oder keine Netzabdeckung bzw. ein oder kein Netzempfang für das oder ein entsprechendes Kommunikationsgerät gegeben ist.

In einem ersten Schritt des Verfahrens wird seitens des Kraftfahrzeugs, mithin kraftfahrzeugseitig, eine Karteninformation erstellt. Die Karteninformation beschreibt zumindest einen Teilbereich des Gebäudes. Die Karteninformation wird auf Grundlage, d. h. allgemein unter Miteinbeziehung, einer kraftfahrzeugseitig erstellten Fahrzeugumfeldinformation erstellt. Die Fahrzeugumfeldinformation beschreibt Objekte, Gegenstände, etc. im Umfeld um das Kraftfahrzeug. Die Fahrzeugumfeldinformation wird zweckmäßig vermittels wenigstens einer, typischerweise mehreren, kraftfahrzeugseitigen akustischen und/oder optischen Erfassungssensoriken zur Erfassung von Objekten im Umfeld um das Kraftfahrzeug erstellt. Bei entsprechenden Erfassungssensoriken kann es sich beispielsweise um Sensoriken, etwa basierend auf Kameras, Laser, Radar oder Ultraschall, handeln. Entsprechende Erfassungssensoriken können auch als Kameras ausgebildet sein oder Kameras umfassen. Selbstverständlich ist eine geeignete Steuereinrichtung vorgesehen, welche, z. B. basierend auf geeigneten Algorithmen, die von entsprechenden Erfassungssensoriken gelieferten Erfassungsdaten datenmäßig in entsprechende Kartendaten und somit in eine entsprechende Karteninformation umsetzt. Die Erstellung der Karteninformation kann dabei beispielsweise vermittels Algorithmen, wie sie beispielsweise in so genannten Simultaneous-Localization-and-Mapping-Verfahren, kurz SLAM-Verfahren, implementiert sind, erfolgen.

Die die Grundlage für das Erstellen der Karteninformation bildende Fahrzeugumfeldinformation wird zweckmäßig auf Basis zumindest eines Teils entsprechender Erfassungsdaten, welche das Fahrzeugumfeld ab dem Einfahren des Kraftfahrzeugs in das Gebäude oder den jeweiligen Gebäudebereich, in welchem das Kraftfahrzeug abgestellt bzw. geparkt wird, bis hin zu dem Abstell- bzw. Parkplatz des Kraftfahrzeugs abbilden, erstellt. Die Fahrzeugumfeldinformation enthält sonach im Allgemeinen wenigstens einen Teil der im Fahrzeugumfeld befindlichen Objekte, die seit dem Einfahren des Kraftfahrzeugs in das Gebäude bis hin zu dem Abstell- bzw. Parkplatz des Kraftfahrzeugs in einem bestimmten Gebäudebereich erfasst wurden.

Aus der Fahrzeugumfeldinformation können gebäudeseitige Objekte, allgemein bestimmte gebäudeseitige semantische Merkmale bzw. Landmarken, extrahiert und in der erstellten Karteninformation datenmäßig gesondert gekennzeichnet hinterlegt werden. Die Karteninformation kann entsprechend mit bestimmten gebäudeseitigen Objekten angereichert werden, indem Letztere gesondert gekennzeichnet in der Karteninformation hinterlegt werden. Entsprechende extrahierte gebäudeseitige Objekte können die vermittels des Kommunikationsgeräts erfolgende Navigation erheblich vereinfachen. Die Extrahierung gebäudeseitiger Objekte aus der Fahrzeugumfeldinformation erfolgt vermittels geeigneter Extrahierungsalgorithmen, wie sie z. B. zur Kantendetektion, insbesondere auch im Rahmen der vorgenannten SLAM-Verfahren, implementiert werden. Insbesondere normierte bzw. standardisierte Objekte, wie z. B. Türen oder bestimmte Beschilderungen, z. B. Beschilderungen von Notausgängen, sind dabei aufgrund ihrer genormten bzw. standardisierten Abmessungen, Formen sowie gegebenenfalls Farbgebungen vergleichsweise einfach zu erfassen.

Bei entsprechenden extrahierbaren oder extrahierten gebäudeseitigen Objekten kann es sich allgemein um baulich mit dem Gebäude oder einem bestimmten Gebäudebereich untrennbar oder (zerstörungsfrei) trennbar verbundene Objekte bzw. Gegenstände handeln. Lediglich beispielhaft wird im Zusammenhang mit entsprechenden gebäudeseitigen Objekten auf gebäudeseitige Bedieneinrichtungen, wie z. B. Bezahlautomaten, Beschilderungen, z. B. von Notausgängen, Fahrbahnmarkierungen, Feuerlöscher, Fenster, Türen, Plakate, Barcodes oder QR-Tags, etc. verwiesen.

In einem zweiten Schritt des Verfahrens wird seitens des Kraftfahrzeugs eine Parkinformation bereitgestellt. Die dem Kraftfahrzeug bereitgestellte Parkinformation beinhaltet eine Parkposition des Kraftfahrzeugs innerhalb des Gebäudes bzw. Gebäudebereichs. In der Parkinformation liegen also Daten über die Position eines Abstellorts bzw. eines Stellplatzes des Kraftfahrzeugs innerhalb des Gebäudes bzw. innerhalb des Gebäudebereichs vor. Das Bereitstellen einer Parkinformation bedeutet insbesondere das Übertragen dieser von einem entsprechende Parkinformationen vorhaltenden Datenserver an das Kraftfahrzeug, d. h. in einen kraftfahrzeugseitigen Datenspeicher, oder das Erstellen einer entsprechenden Parkinformation seitens des Kraftfahrzeugs. Ein entsprechende Parkinformationen vorhaltender Datenserver kann ebenso gebäudeseitig vorgesehen sein.

Die Karteninformation und die Parkinformation können datenmäßig miteinander verbunden, d. h. z. B. fusioniert, werden, so dass eine entsprechend durch eine Parkinformation abgebildete Parkposition mit durch eine Karteninformation abgebildeten Kartendaten des Gebäudes bzw. des Gebäudebereichs referenziert werden kann.

In einem dritten Schritt des Verfahrens werden die Karteninformation sowie Parkinformation von dem Kraftfahrzeug an das oder ein entsprechendes Kommunikationsgerät übertragen. Hierfür ist eine geeignete Daten- bzw. Kommunikationsverbindung zwischen dem Kraftfahrzeug, d. h. insbesondere einer kraftfahrzeugseitigen Sendeeinrichtung, und dem Kommunikationsgerät, d. h. insbesondere einer kommunikationsgerätseitigen Empfangseinrichtung, auszubilden bzw. herzustellen. Nach der Übertragung liegen die Karteninformation sowie die Parkinformation sonach (auch) in dem Kommunikationsgerät vor und können dort grundsätzlich zu verschiedenen Zwecken verarbeitet werden.

An dieser Stelle sei erwähnt, dass es sich bei einem entsprechenden Kommunikationsgerät z. B. um ein Handy, ein Smartphone, ein Tablet, einen Laptop und dergleichen handeln kann. Denkbar ist auch, dass es sich bei einem entsprechenden Kommunikationsgerät um ein mobiles Navigationsgerät handelt.

Das Übertragen der Karteninformation und der Parkinformation seitens des Kraftfahrzeugs an das oder ein entsprechendes Kommunikationsgerät erfolgt typischerweise über eine zwischen dem Kraftfahrzeug und dem Kommunikationsgerät unmittelbar oder mittelbar bestehende, insbesondere drahtlose, Daten- bzw. Kommunikationsverbindung. Dabei kann es sich z. B. um eine Bluetooth-Verbindung oder um eine gebäude- und/oder kraftfahrzeugseitige Drahtlosnetzwerkverbindung, z. B. ein lokales gebäude- und/oder kraftfahrzeugseitiges WLAN, handeln.

Im Rahmen des beschriebenen Verfahrens werden die Karteninformation und die Parkinformation seitens des Kommunikationsgeräts im Zusammenhang mit einer über das Kommunikationsgerät realisierten Navigation des Benutzers verarbeitet. Entsprechend wird in einem vierten Schritt des Verfahrens auf Grundlage, d. h. im Allgemeinen unter Miteinbeziehung, der übertragenen Karteninformation und der übertragenen Parkinformation seitens des Kommunikationsgeräts, eine Navigationsinformation erstellt. Die Navigationsinformation beinhaltet wenigstens eine Navigationsroute zwischen der ersten Position und der zweiten Position, d. h. wenigstens eine von dem oder einem Benutzer zurückzulegende Wegstrecke, um von der ersten Position zu der zweiten Position zu gelangen. Sofern die erstellte Navigationsinformation mehrere Navigationsrouten enthält, kann dem Benutzer eine Auswahlmöglichkeit dahin gegeben werden, welche Navigationsroute er verfolgen möchte.

In einem fünften Schritt des Verfahrens erfolgt ein Navigieren des Benutzers von der ersten Position in die zweite Position auf Grundlage, d. h. im Allgemeinen unter Miteinbeziehung, der Navigationsinformation. Dem Benutzer werden also über seitens des mobilen Kommunikationsgeräts vorhandene Ausgabemittel akustische und/oder optische und/oder haptische Signale gegeben, anhand welcher er sich vermittels des Kommunikationsgeräts von der ersten Position zu der zweiten Position navigieren lassen kann. Konkret können dem Benutzer dabei z. B. an einem kommunikationsgerätseitigen Display graphische Elemente, z. B. Pfeile, dargestellt werden, welche ihm den Weg von der ersten Position zu der zweiten Position anzeigen.

Das beschriebene Verfahren ermöglicht eine Navigation vermittels eines entsprechenden Kommunikationsgeräts auch in bzw. durch gebäudeseitige(n) Bereiche(n), zu welchen keine Kartendaten vorhanden sind und/oder in welchen keine Netzabdeckung bzw. kein Netzempfang gegeben ist. Wesentlich ist dabei, dass eine entsprechende Karteninformation und eine entsprechende Parkinformation zunächst kraftfahrzeugseitig erstellt bzw. bereitgestellt und nachfolgend unabhängig von dem Netzempfang des Kommunikationsgeräts, d. h. unabhängig davon, ob das Kommunikationsgerät mit einem Daten- bzw. Kommunikationsnetzwerk, insbesondere einem Mobilfunknetz, verbunden ist, an das Kommunikationsgerät übertragen werden. Für die Übertragung ist allein eine geeignete Daten- bzw. Kommunikationsverbindung zwischen dem Kraftfahrzeug und dem Kommunikationsgerät auszubilden bzw. herzustellen. Zur Ausbildung bzw. Herstellung einer solchen Daten- bzw. Kommunikationsverbindung muss das Kommunikationsgerät nicht mit einem (globalen) Daten- bzw. Kommunikationsnetzwerk, insbesondere einem Mobilfunknetz, verbunden sein. Es handelt sich bei der Daten- bzw. Kommunikationsverbindung zwischen dem Kraftfahrzeug und dem Kommunikationsgerät typischerweise um eine lokale, gegebenenfalls zeitlich begrenzte, Daten- bzw. Kommunikationsverbindung zum Zwecke der Übertragung einer entsprechenden Karteninformation bzw. einer entsprechenden Parkinformation.

Das Bereitstellen der Parkinformation kann beispielsweise vermittels kraftfahrzeugseitiger Positionsermittlungseinrichtungen zur Ermittlung der Position des Kraftfahrzeugs innerhalb des Gebäudes und/oder gebäudeseitiger Positionsermittlungseinrichtungen zur Ermittlung der Position des Kraftfahrzeugs innerhalb des Gebäudes erfolgen. Das Kraftfahrzeug kann seine Parkposition sonach über diesem zugehörige Positionsermittlungseinrichtungen, bei welchen es sich ebenso um akustische und/oder optische Positionssensoriken, etwa basierend auf Kameras, Laser, Radar oder Ultraschall, handeln kann, ermitteln. Entsprechende Positionsermittlungseinrichtungen können auf dieselben kraftfahrzeugseitigen Sensoriken zugreifen wie entsprechende kraftfahrzeugseitige Erfassungseinrichtungen. Die Parkinformation kann sonach, wie vorstehend erwähnt, seitens des Kraftfahrzeugs erstellt werden. Insbesondere kann das Kraftfahrzeug hierbei die ihm bereitgestellte Karteninformation miteinbeziehen, d. h. über entsprechende Positionsermittlungseinrichtungen ermittelte Positionen des Kraftfahrzeugs mit der Karteninformation abgleichen bzw. referenzieren. Alternativ oder ergänzend kann die Parkposition des Kraftfahrzeugs über gebäudeseitige Positionsermittlungseinrichtungen, bei welchen es sich ebenso z. B. um akustische und/oder optische Positionssensoriken, etwa basierend auf Kameras, Laser, Radar oder Ultraschall, handeln kann, ermittelt werden. Über entsprechende gebäudeseitige Positionsermittlungseinrichtungen können Bewegungen des Kraftfahrzeugs innerhalb des bzw. durch das Gebäude bis zu einer Parkposition verfolgt und Letztere somit abgebildet werden. Eine gebäudeseitig ermittelte Parkposition kann enthalten in einer entsprechenden Parkinformation in einem, insbesondere gebäudeseitig vorgesehenen, Datenserver vorgehalten und an das Kraftfahrzeug übertragen werden.

Aus vorstehenden Ausführungen ergibt sich, dass das Bereitstellen der Parkinformation auch über einen gebäudeseitigen Parkpositionsserver, in welchem mögliche gebäudeseitige Parkpositionen, d. h. insbesondere freie Stellplätze, für das Kraftfahrzeug vorliegen, erfolgen kann. Bei einem gebäudeseitigen Parkpositionsserver kann es sich um einen entsprechenden gebäudeseitig ermittelte Parkpositionen vorhaltenden Datenserver handeln. Es ist dabei möglich, dass dem Kraftfahrzeug seitens des gebäudeseitigen Parkpositionsservers eine mögliche Parkposition zugeordnet wird.

Es ist möglich, dass das Kommunikationsgerät eine Objekte im Umfeld um das Kommunikationsgerät beschreibende Umfeldinformation erstellt. Im Unterschied zu der kraftfahrzeugseitig erstellten Fahrzeugumfeldinformation beschreibt die kommunikationsgeräteseitig erstellte Umfeldinformation Objekte im Umfeld um das Kommunikationsgerät, so dass nicht das Kraftfahrzeug, sondern das Kommunikationsgerät als Bezugspunkt dient. Im Übrigen gelten obige Ausführungen im Zusammenhang mit der kraftfahrzeugseitig erstellten Fahrzeugumfeldinformation analog. Mithin ist es beispielsweise auch möglich, über geeignete kommunikationsgeräteseitige Extrahierungsalgorithmen, bestimmte gebäudeseitige Objekte aus der Umfeldinformation zu extrahieren.

Zweckmäßig kann es vorgesehen sein, dass in der vermittels des Kommunikationsgeräts erstellten Umfeldinformation beschriebene, gegebenenfalls extrahierte, gebäudeseitigen Objekte im Umfeld um das Kommunikationsgerät mit in der an das Kommunikationsgerät übertragenen Karteninformation beschriebenen, gegebenenfalls extrahierten, gebäudeseitigen Objekten abgeglichen werden. Hierdurch, d. h. insbesondere durch den Abgleich kommunikationsgeräteseitig erfasster Objekte mit kraftfahrzeugseitig erfassten Objekten, kann die Navigation vermittels des Kommunikationsgeräts erheblich vereinfacht werden. Insbesondere können kommunikationsgeräteseitig wie auch kraftfahrzeugseitig erfasste Objekte plausibilisiert werden.

Es ist denkbar, dass über das benutzerseitige mobile Kommunikationsgerät eine zusätzliche, zumindest einen Teilbereich des Gebäudes beschreibende Karteninformation bereitgestellt und an das Kraftfahrzeug übertragen wird. Die kommunikationsgeräteseitig bereitgestellte Karteninformation kann seitens des Kommunikationsgeräts z. B. aus einem Daten- bzw. Kommunikationsnetzwerk, insbesondere einem Mobilfunknetzwerk, geladen werden, was selbstverständlich nur möglich ist, wenn das Kommunikationsgerät mit einem solchen Netzwerk verbunden ist. Dies ist typischerweise nur außerhalb eines Gebäudebereichs möglich, in welchem keine Netzabdeckung und somit kein Netzempfang seitens des Kommunikationsgeräts gegeben ist. Auf Grundlage der von dem Kommunikationsgerät an das Kraftfahrzeug übertragenen Karteninformation kann das Kraftfahrzeug beispielsweise, insbesondere zumindest teilautomatisiert, navigiert werden. Selbstverständlich kann die seitens des Kommunikationsgeräts an das Kraftfahrzeug übertragene Karteninformation mit einer vorher kraftfahrzeugseitig erstellten Karteninformation fusioniert werden, um beispielsweise den Detaillierungsgrad der Kartendaten zu erhöhen oder bestimmte in der kraftfahrzeugseitig erstellten Karteninformation enthaltene gebäudeseitige Objekte zu plausibilisieren.

Die Navigationsinformation kann erste Navigationsdaten, welche wenigstens einen zwischen der ersten Position und der zweiten Position innerhalb des Gebäudes liegenden Navigationsroutenabschnitt beschreiben, und weitere Navigationsdaten, welche wenigstens einen zwischen der ersten Position und der zweiten Position außerhalb des Gebäudes liegenden Navigationsroutenabschnitt beschreiben, beinhalten. Die Navigationsinformation kann also prinzipiell in solche Navigationsdaten, welche innerhalb des Gebäudes, aus dem oder in das zu navigieren ist, liegende Navigationsroutenabschnitte beinhalten, und in solche Navigationsdaten, welche außerhalb des Gebäudes, aus dem oder in das zu navigieren ist, liegende Navigationsroutenabschnitte beinhalten, aufgeteilt werden. Wie sich im Folgenden ergibt, können die jeweiligen Navigationsdaten datenmäßig unterschiedlich (weiter)verarbeitet werden.

Die weiteren Navigationsdaten können beispielsweise durch außerhalb des Gebäudes seitens des Kommunikationsgeräts über ein außerhalb des Gebäudes gegebenes Daten- bzw. Kommunikationsnetzwerk, insbesondere ein Mobilfunknetz, bereitstellbare oder bereitgestellte Navigationsdaten ergänzt, plausibilisiert, gegebenenfalls auch überschrieben, werden. Hieraus ergibt sich ein wesentlicher Vorteil des beschriebenen Verfahrens, welcher eine nahtlose Navigation eines Benutzers zwischen entsprechenden Bereichen, in welchen keine Netzabdeckung für das oder ein entsprechendes Kommunikationsgerät gegeben ist, und Bereichen, in welchen eine Netzabdeckung für das oder ein entsprechendes Kommunikationsgerät (wieder) gegeben ist, ermöglicht. In ersteren Bereichen werden die für die Navigation erforderlichen Daten über das Kraftfahrzeug an das Kommunikationsgerät übertragen und können seitens des Kommunikationsgeräts zu Navigationszwecken, insbesondere innerhalb des Gebäudes, verarbeitet werden. In zweiteren Bereichen kann ergänzend oder plausibilisierend auf über ein außerhalb des Gebäudes gegebenes Daten- bzw. Kommunikationsnetzwerk, insbesondere ein Mobilfunknetz, bereitstellbare oder bereitgestellte Navigationsdaten zurückgegriffen und diese seitens des Kommunikationsgeräts zu Navigationszwecken verarbeitet werden.

Die ersten Navigationsdaten können z. B. einen Navigationsroutenabschnitt zwischen der ersten Position (innerhalb des Gebäudes), wie erwähnt, typischerweise der Parkposition des Kraftfahrzeugs, und einem gebäudeseitigen Ausgangs- oder Eingangsbereich beschreiben. Die weiteren Navigationsdaten können entsprechend einen Navigationsroutenabschnitt zwischen dem oder einem gebäudeseitigen Ausgangs- oder Eingangsbereich und der zweiten Position (außerhalb des Gebäudes) beschreiben.

Das beschriebene Verfahren ermöglicht, wie eingangs erwähnt, auch eine umgekehrte Navigation eines Benutzers von einer entsprechenden zweiten Position (außerhalb des Gebäudes, insbesondere außerhalb eines entsprechenden Gebäudebereichs, in welchem keine Netzabdeckung für das oder ein entsprechendes Kommunikationsgerät gegeben ist) in eine entsprechende erste Position (innerhalb des Gebäudes, insbesondere innerhalb eines entsprechenden Gebäudebereichs, in welchem keine Netzabdeckung für das oder ein entsprechendes Kommunikationsgerät gegeben ist). Die Navigation des Benutzers von der zweiten Position in die erste Position erfolgt ebenso vermittels des Kommunikationsgeräts auf Grundlage bzw. unter Miteinbeziehung einer entsprechenden Navigationsinformation. Es ist hierfür erforderlich, zunächst seitens des Kommunikationsgeräts eine entsprechende Navigationsinformation wie weiter oben beschrieben zu erstellen.

Die Erfindung betrifft ferner ein System umfassend ein Kraftfahrzeug sowie ein mobiles Kommunikationsgerät. Das Kraftfahrzeug und das mobile Kommunikationsgerät sind zusammen zur Durchführung des beschriebenen Verfahrens ausgebildet bzw. eingerichtet. Mithin gelten sämtliche Ausführungen im Zusammenhang mit dem Verfahren analog für das Kraftfahrzeug sowie für das mobile Kommunikationsgerät.

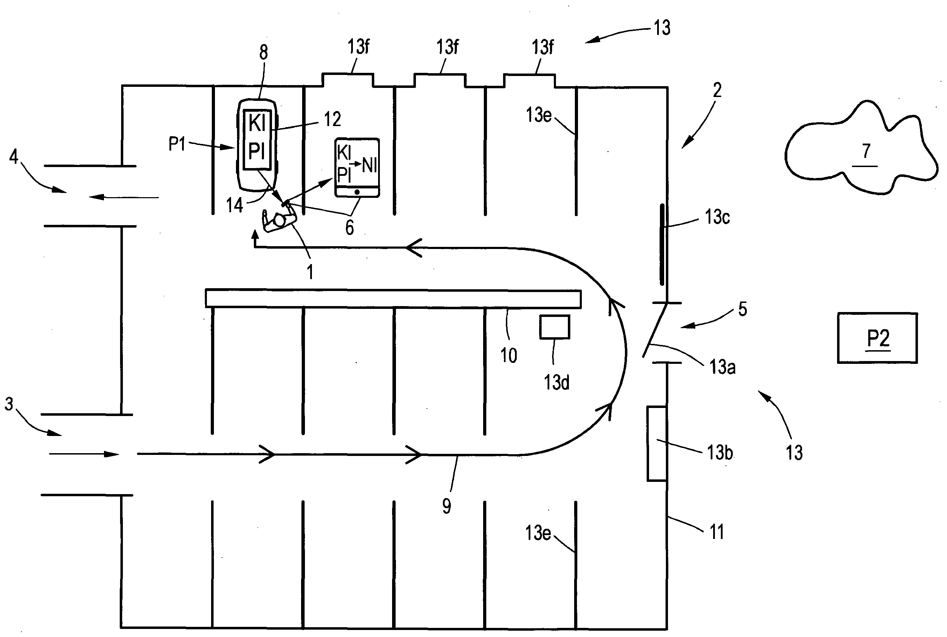

Weitere Vorteile, Merkmale und Einzelheiten der Erfindung ergeben sich aus dem im Folgenden beschriebenen Ausführungsbeispiel sowie anhand der Zeichnung. Dabei zeigt die einzige Fig. eine Prinzipdarstellung zur Veranschaulichung der Durchführung eines Verfahrens gemäß einem Ausführungsbeispiel der Erfindung.

Die einzige Fig. zeigt eine Prinzipdarstellung zur Veranschaulichung der Durchführung eines Verfahrens gemäß einem Ausführungsbeispiel der Erfindung.

Das Verfahren dient der Navigation eines Benutzers 1 zwischen einer ersten Position P1 und einer zweiten Position P2, oder umgekehrt. Je nachdem, ob die erste Position P1 oder die zweite Position P2 als Ausgangspunkt dient, kann entweder die zweite Position P2 oder die erste Position P1 als Zielposition bezeichnet bzw. erachtet werden. In dem gezeigten Ausführungsbeispiel kann die erste Position P1 als Ausgangsposition und die zweite Position P2 als Zielposition bezeichnet bzw. erachtet werden.

Ersichtlich befindet sich die erste Position P1 innerhalb eines Gebäudes 2, bei welchem es sich bei dem gezeigten Ausführungsbeispiel um ein mehrere oberhalb der Erdoberfläche liegende Obergeschosse und mehrere unterhalb der Erdoberfläche liegende Untergeschosse aufweisendes Parkhaus handelt.

Die Fig. zeigt eine Aufsicht auf ein Untergeschoss des Gebäudes 2. In das Untergeschoss führt eine von einem oberhalb des Untergeschosses liegenden Untergeschoss kommende Abfahrt 3, von dem Untergeschoss geht eine in ein unterhalb des Untergeschosses liegendes weiteres Untergeschoss führende weitere Abfahrt 4 ab. Das Geschoss weist einen kombinierten Ein- und Ausgangsbereich 5 für Benutzer 1 auf. Der Ein- und Ausgangsbereich 5 führt in ein Treppenhaus (nicht gezeigt), über welche Benutzer das Gebäude 2 betreten bzw. verlassen können.

Bei dem Untergeschoss handelt es sich um einen Gebäudebereich bzw. einen Teil des Gebäudes 2, in welchem keine Netzabdeckung bzw. kein Netzempfang für ein benutzerseitiges mobiles Kommunikationsgerät 6, hier z. B. in Form eines Smartphones, gegeben ist. Das Kommunikationsgerät 6 ist also in der ersten Position P1 nicht oder merklich eingeschränkt mit einem Daten- bzw. Kommunikationsnetzwerk 7, d. h. einem Mobilfunknetz, verbindbar oder verbunden. Der in neben dem geparkten Kraftfahrzeug 8 stehende Benutzer 1 kann also über sein Kommunikationsgerät 6 keine Verbindung mit dem Daten- bzw. Kommunikationsnetzwerk 7 aufbauen. Zu dem Gebäude 2 liegen (zunächst) keine kartographischen Daten, kurz Kartendaten, vor.

Ersichtlich fällt die erste Position P1 mit der Parkposition des Kraftfahrzeugs 8 in dem Untergeschoss 5 zusammen. Um zu der gezeigten Parkposition zu gelangen, wurde das Kraftfahrzeug 8 bezogen auf das gezeigte Untergeschoss entlang des Pfeils 9 bewegt werden. Das Kraftfahrzeug 8 kam sonach von der Abfahrt 3, fuhr parallel entlang einer Gebäudemauer 10 in Richtung der Gebäudewand 11, drehte nach links, fuhr wiederum parallel entlang der Gebäudemauer 10, bis es die gezeigte Parkposition einnahm.

Die durch einen Kasten angedeutete zweite Position P2 befindet sich in dem gezeigten Ausführungsbeispiel außerhalb des Gebäudes 2. Grundsätzlich könnte sich die zweite Position P2 jedoch ebenso in einem Gebäudebereich und somit in einem Teil eines Gebäudes 2 befinden.

Wie erwähnt, liegen zu dem Gebäude 2 keine Kartendaten vor. In einem ersten Schritt des Verfahrens wird seitens des Kraftfahrzeugs 8, mithin kraftfahrzeugseitig, daher zunächst eine Karteninformation KI erstellt. Die Karteninformation KI beschreibt zumindest einen Teilbereich des Gebäudes 2. Die Karteninformation KI wird auf Grundlage, d. h. allgemein unter Miteinbeziehung, einer kraftfahrzeugseitig erstellten Fahrzeugumfeldinformation erstellt. Die Fahrzeugumfeldinformation beschreibt Objekte, Gegenstände, etc. im Umfeld um das Kraftfahrzeug 8.

Die Fahrzeugumfeldinformation wird vermittels kraftfahrzeugseitiger akustischer und/oder optischer Erfassungssensoriken (nicht gezeigt) zur Erfassung von Objekten im Umfeld um das Kraftfahrzeug 8 erstellt. Bei entsprechenden Erfassungssensoriken handelt es sich beispielsweise um Sensoriken basierend auf Kameras, Laser, Radar oder Ultraschall. Ferner können auch als Kameras ausgebildete Erfassungssensoriken vorgesehen sein, welche z. B. einen Erfassungsbereich von 360° aufweisen.

Die Fahrzeugumfeldinformation wird auf Basis zumindest eines Teils entsprechender Erfassungsdaten, welche das Fahrzeugumfeld ab dem Einfahren des Kraftfahrzeugs 8 in das Gebäude 2 oder den jeweiligen Gebäudebereich, hier das Untergeschoss, in welchem das Kraftfahrzeug 8 abgestellt bzw. geparkt wird, bis hin zu dem Abstell- bzw. Parkplatz des Kraftfahrzeugs 8 abbilden, erstellt. Die Fahrzeugumfeldinformation enthält sonach wenigstens einen Teil der im Fahrzeugumfeld befindlichen Objekte, die seit dem Einfahren des Kraftfahrzeugs 8 in das Gebäude 2 bis hin zu dem Abstell- bzw. Parkplatz des Kraftfahrzeugs 8 in einem bestimmten Gebäudebereich erfasst wurden.

Das Kraftfahrzeug 8 umfasst eine Steuereinrichtung 12, welche basierend auf geeigneten Algorithmen die von entsprechenden Erfassungssensoriken gelieferten Erfassungsdaten datenmäßig in Kartendaten und somit in eine entsprechende Karteninformation KI umsetzt. Die Erstellung der Karteninformation KI kann dabei beispielsweise vermittels Algorithmen, wie sie beispielsweise in so genannten Simultaneous-Localization-and-Mapping-Verfahren, kurz SLAM-Verfahren, implementiert sind, erfolgen.

Aus der Fahrzeugumfeldinformation können gebäudeseitige Objekte 13, allgemein bestimmte gebäudeseitige semantische Merkmale bzw. Landmarken, extrahiert und in der erstellten Karteninformation KI datenmäßig gesondert gekennzeichnet hinterlegt werden. Die Karteninformation KI kann entsprechend mit bestimmten gebäudeseitigen Objekten 13 angereichert werden. Die Extraktion gebäudeseitiger Objekte 13 aus der Fahrzeugumfeldinformation erfolgt vermittels geeigneter Extrahierungsalgorithmen, wie sie z. B. zur Kantendetektion, insbesondere auch im Rahmen der vorgenannten SLAM-Verfahren, implementiert

Bei entsprechenden extrahierbaren oder extrahierten gebäudeseitigen Objekten 13 kann es sich allgemein um baulich mit dem Gebäude 2 oder einem bestimmten Gebäudebereich untrennbar oder (zerstörungsfrei) trennbar verbundene Objekte bzw. Gegenstände handeln. In dem gezeigten Ausführungsbeispiel handelt es sich bei entsprechenden extrahierbaren oder extrahierten Objekten 13 in dem Untergeschoss um einen in dem Ein- und Ausgangsbereich 5 vorgesehene, mithin das Untergeschoss von dem Treppenhaus trennende Türe 13a, einen rechts neben der Türe 13a angeordneten Bezahlautomaten 13b, ein links neben der Türe 13a wandseitig angebrachtes Plakat 13c bzw. eine Beschilderung z. B. eines Notausgangs, z. B. zu Informations- oder Werbezwecken, einen an der Gebäudemauer 10 angebrachten Feuerlöscher 13d, Fahrbahnmarkierungen 13e, z. B. zur Markierung von Fahrspuren oder geschossseitigen Park- bzw. Stellplätzen, sowie eine durch Vertiefungen 13f gebildete Strukturierung der Gebäudewand 11. Insbesondere typischerweise in ihren Abmessungen standardisierte Objekte 13, wie z. B. Türen 13a, können z. B. vermittels geeigneter Kantendetektionsverfahren erkannt und extrahiert werden. Insbesondere normierte bzw. standardisierte Objekte, wie z. B. Türen 13a oder bestimmte Beschilderungen, z. B. Beschilderungen von Notausgängen, sind dabei aufgrund ihrer genormten bzw. standardisierten Abmessungen, Formen sowie gegebenenfalls Farbgebungen vergleichsweise einfach zu erfassen.

In einem zweiten Schritt des Verfahrens wird seitens des Kraftfahrzeugs 8 eine Parkinformation PI bereitgestellt. Die Parkinformation PI beinhaltet die bzw. im Allgemeinen eine Parkposition PI des Kraftfahrzeugs 8 innerhalb des Gebäudes 2. In der Parkinformation PI liegen also Daten über die Position des Abstellorts bzw. des Stellplatzes des Kraftfahrzeugs 8 innerhalb des Gebäudes 2 vor. Das Bereitstellen der Parkinformation PI kann durch Übertragen dieser von einem entsprechende Parkinformationen PI vorhaltenden gebäudeseitigen Datenserver (nicht gezeigt) an das Kraftfahrzeug 8, d. h. in einen kraftfahrzeugseitigen Datenspeicher, erfolgen. Möglich ist es jedoch auch, dass das Kraftfahrzeug 8 eine entsprechende Parkinformation PI selbst erstellt. Dies kann beispielsweise vermittels kraftfahrzeugseitiger Positionsermittlungseinrichtungen (nicht gezeigt) zur Ermittlung der Position des Kraftfahrzeugs 8 innerhalb des Gebäudes 2 erfolgen.

Die Karteninformation KI und die Parkinformation PI können datenmäßig miteinander verbunden, d. h. z. B. fusioniert, werden, so dass eine entsprechend durch eine Parkinformation PI abgebildete Parkposition mit durch eine Karteninformation KI abgebildeten Kartendaten des Gebäudes 2 referenziert werden kann.

In einem dritten Schritt des Verfahrens werden die Karteninformation KI sowie die Parkinformation PI von dem Kraftfahrzeug 8 an das benutzerseitige Kommunikationsgerät 6 übertragen. Die Übertragung ist durch den Pfeil 14 angedeutet. Hierfür ist eine geeignete Daten- bzw. Kommunikationsverbindung zwischen dem Kraftfahrzeug 8 und dem Kommunikationsgerät 6 auszubilden bzw. herzustellen. Dabei kann es sich z. B. um eine Bluetooth-Verbindung oder um eine kraftfahrzeugseitige Drahtlosnetzwerkverbindung, z. B. ein lokales kraftfahrzeugseitiges WLAN, handeln. Nach der Übertragung liegen die Karteninformation KI und die Parkinformation PI sonach (auch) in dem Kommunikationsgerät 6 vor.

Die nun seitens des Kommunikationsgeräts 6 vorliegende Karteninformation KI und Parkinformation PI werden im Zusammenhang mit einer über das Kommunikationsgerät 6 realisierten Navigation des Benutzers 1 verarbeitet. In einem vierten Schritt des Verfahrens wird seitens des Kommunikationsgeräts 6 auf Grundlage der Karteninformation KI und der Parkinformation PI eine Navigationsinformation NI erstellt. Die Navigationsinformation NI beinhaltet wenigstens eine Navigationsroute zwischen der ersten Position P1 und der zweiten Position P2, d. h. wenigstens eine von dem oder einem Benutzer zurückzulegende Wegstrecke, um von der ersten Position P1 zu der zweiten Position P2 zu gelangen.

In einem fünften Schritt des Verfahrens erfolgt ein Navigieren des Benutzers 1 von der ersten Position P1 in die zweite Position auf Grundlage der Navigationsinformation NI. Dem Benutzer 1 werden über seitens des Kommunikationsgeräts 6 vorhandene Ausgabemittel akustische und/oder optische und/oder haptische Signale gegeben, anhand welcher er sich von der ersten Position P1 zu der zweiten Position P2 navigieren lassen kann. Konkret können dem Benutzer 1 dabei z. B. an einem kommunikationsgerätseitigen Display graphische Elemente, z. B. Pfeile, dargestellt werden, welche ihm den Weg von der ersten Position P1 zu der zweiten Position P2 anzeigen.

Das Kommunikationsgerät 6 kann eine Objekte im Umfeld um das Kommunikationsgerät 6 beschreibende Umfeldinformation erstellen. Im Unterschied zu der kraftfahrzeugseitig erstellten Fahrzeugumfeldinformation beschreibt die kommunikationsgeräteseitig erstellte Umfeldinformation also Objekte im Umfeld um das Kommunikationsgerät 6, so dass nicht das Kraftfahrzeug 8, sondern das Kommunikationsgerät 6 als Bezugspunkt dient. Es kann möglich sein, über geeignete kommunikationsgeräteseitige Extrahierungsalgorithmen bestimmte gebäudeseitige Objekte 13 aus der Umfeldinformation zu extrahieren.

Die in der vermittels des Kommunikationsgeräts erstellten Umfeldinformation beschriebenen, insbesondere extrahierten, gebäudeseitigen Objekte 13 können mit in der an das Kommunikationsgerät 6 übertragenen Karteninformation KI beschriebenen, insbesondere extrahierten, gebäudeseitigen Objekten 13 abgeglichen werden. Durch den Abgleich kommunikationsgeräteseitig erfasster Objekte 13 mit kraftfahrzeugseitig erfassten Objekten 13 kann die Navigation vermittels des Kommunikationsgeräts 6 erheblich vereinfacht werden. Insbesondere können kommunikationsgeräteseitig wie auch kraftfahrzeugseitig erfasste Objekte 13 plausibilisiert werden.

Über das Kommunikationsgerät 6 kann eine zusätzliche, zumindest einen Teilbereich des Gebäudes 2 beschreibende Karteninformation KI bereitgestellt und an das Kraftfahrzeug 8 übertragen werden. Die kommunikationsgeräteseitig bereitgestellte Karteninformation KI kann seitens des Kommunikationsgeräts 6 aus einem Daten- bzw. Kommunikationsnetzwerk 7, insbesondere einem Mobilfunknetzwerk, (nach)geladen werden, was selbstverständlich nur möglich ist, wenn das Kommunikationsgerät 6 mit einem solchen Netzwerk verbunden ist. Dies ist typischerweise nur außerhalb eines Gebäudebereichs möglich, in welchem keine Netzabdeckung und somit kein Netzempfang seitens des Kommunikationsgeräts 6 gegeben ist. Auf Grundlage der von dem Kommunikationsgerät 6 an das Kraftfahrzeug 8 übertragenen Karteninformation KI kann das Kraftfahrzeug 8, insbesondere zumindest teilautomatisiert, navigiert werden. Möglich ist es auch, die seitens des Kommunikationsgeräts 6 an das Kraftfahrzeug 8 übertragene Karteninformation KI mit einer vorher kraftfahrzeugseitig erstellten Karteninformation KI zu fusionieren, um beispielsweise den Detaillierungsgrad der Kartendaten zu erhöhen oder bestimmte in der kraftfahrzeugseitig erstellten Karteninformation KI enthaltene gebäudeseitige Objekte 13 zu plausibilisieren.

Die Navigationsinformation NI kann erste Navigationsdaten, welche wenigstens einen zwischen der ersten Position P1 und der zweiten Position P2 innerhalb des Gebäudes 2 liegenden Navigationsroutenabschnitt beschreiben, und weitere Navigationsdaten, welche wenigstens einen zwischen der ersten Position P1 und der zweiten Position P2 außerhalb des Gebäudes 2 liegenden Navigationsroutenabschnitt beschreiben, beinhalten. Die Navigationsinformation NI kann also prinzipiell in solche Navigationsdaten, welche innerhalb des Gebäudes 2, aus dem oder in das zu navigieren ist, liegende Navigationsroutenabschnitte beinhalten, und in solche Navigationsdaten, welche außerhalb des Gebäudes 2, aus dem oder in das zu navigieren ist, liegende Navigationsroutenabschnitte beinhalten, aufgeteilt werden.

Die weiteren Navigationsdaten können durch außerhalb des Gebäudes 2 seitens des Kommunikationsgeräts 6 über ein außerhalb des Gebäudes 2 gegebenes Daten- bzw. Kommunikationsnetzwerk 7, insbesondere ein Mobilfunknetz, bereitstellbare oder bereitgestellte Navigationsdaten ergänzt, plausibilisiert, gegebenenfalls auch überschrieben, werden. Hieraus ergibt sich ein wesentlicher Vorteil des Verfahrens, welcher eine nahtlose Navigation eines Benutzers 1 zwischen entsprechenden Bereichen, in welchen keine Netzabdeckung für das Kommunikationsgerät 6 gegeben ist, und Bereichen, in welchen eine Netzabdeckung für das Kommunikationsgerät 6 (wieder) gegeben ist, ermöglicht. In ersteren Bereichen werden die für die Navigation erforderlichen Daten über das Kraftfahrzeug 8 an das Kommunikationsgerät 6 übertragen und können seitens des Kommunikationsgeräts 6 zu Navigationszwecken, insbesondere innerhalb des Gebäudes 2, verarbeitet werden. In zweiteren Bereichen kann ergänzend oder plausibilisierend auf über ein außerhalb des Gebäudes 2 gegebenes Daten- bzw. Kommunikationsnetzwerk 7, insbesondere ein Mobilfunknetz, bereitstellbare oder bereitgestellte Navigationsdaten zurückgegriffen und diese seitens des Kommunikationsgeräts 6 zu Navigationszwecken verarbeitet werden.

Die ersten Navigationsdaten können einen Navigationsroutenabschnitt zwischen der ersten Position P1 (innerhalb des Gebäudes), d. h. typischerweise der Parkposition des Kraftfahrzeugs 8, und einem gebäudeseitigen Eingangs- oder Ausgangsbereich, über welchen Benutzer 1 in das Gebäude 2 eintreten und das Gebäude 2 verlassen können, beschreiben. Die weiteren Navigationsdaten können entsprechend einen Navigationsroutenabschnitt zwischen dem oder einem gebäudeseitigen Ausgangs- oder Eingangsbereich und der zweiten Position P2 (außerhalb des Gebäudes) beschreiben.

Das Verfahren erlaubt selbstverständlich auch eine umgekehrte Navigation des Benutzers 1 von der zweiten Position P2 in die erste Position P1. Die Navigation des Benutzers 1 von der zweiten Position P2 in die erste Position P1 erfolgt ebenso mittels des Kommunikationsgeräts 6 unter Miteinbeziehung der Navigationsinformation NI. Es ist hier erforderlich, zunächst seitens des benutzerseitigen mobilen Kommunikationsgeräts 6 eine entsprechende Navigationsinformation NI, wie beschrieben, zu erstellen.

## Patentansprüche

1. Verfahren zur Navigation eines Benutzers (1) zwischen einer ersten Position (P1) innerhalb eines Gebäudes (2), wobei die erste Position (P1) eine Parkposition eines in dem Gebäude (2) geparkten Kraftfahrzeugs (8) ist, und einer zweiten Position (P2), oder umgekehrt, **gekennzeichnet durch** folgende Schritte:
- Erstellen einer zumindest einen Teilbereich des Gebäudes (2) beschreibenden Karteninformation (KI) seitens des Kraftfahrzeugs (8) auf Grundlage einer kraftfahrzeugseitig erstellten, Objekte (13) im Umfeld um das Kraftfahrzeug (8) beschreibenden Fahrzeugumfeldinformation,
- Bereitstellen einer eine Parkposition des Kraftfahrzeugs (8) innerhalb des Gebäudes (2) beinhaltenden Parkinformation (PI) seitens des Kraftfahrzeugs (8),
- Übertragen der Karteninformation (KI) und der Parkinformation (PI) von dem Kraftfahrzeug (8) an ein benutzerseitiges mobiles Kommunikationsgerät (6),
- Erstellen einer wenigstens eine Navigationsroute zwischen der ersten Position und der zweiten Position beinhaltenden Navigationsinformation (NI) auf Grundlage der übertragenen Karteninformation (KI) und der übertragenen Parkinformation (PI) seitens des benutzerseitigen mobilen Kommunikationsgeräts (6) und
- Navigieren des Benutzers (1) von der ersten Position (P1) in die zweite Position (P2), oder umgekehrt, vermittels des mobilen Kommunikationsgeräts (6) auf Grundlage der Navigationsinformation (NI), wobei die Navigationsinformation (NI) wenigstens eine von dem Benutzer zurückzulegende Wegstrecke, um von der ersten Position (P1) zu der zweiten Position (P2), oder umgekehrt, zu gelangen, umfasst.

2. Verfahren nach Anspruch 1,
**dadurch gekennzeichnet,**
**dass** aus der Fahrzeugumfeldinformation gebäudeseitige Objekte (13) extrahiert und in der erstellten Karteninformation (KI) gesondert gekennzeichnet hinterlegt werden.

3. Verfahren nach Anspruch 2,
**dadurch gekennzeichnet,**
**dass** als gebäudeseitige Objekte (13) baulich mit dem Gebäude (2) untrennbar oder trennbar verbundene Objekte (13) beschrieben werden.

4. Verfahren nach einem der vorangehenden Ansprüche,
**dadurch gekennzeichnet,**
**dass** das benutzerseitige mobile Kommunikationsgerät (6) eine Objekte (13) im Umfeld um das benutzerseitige mobile Kommunikationsgerät (6) beschreibende Umfeldinformation erstellt.

5. Verfahren nach Anspruch 4,
**dadurch gekennzeichnet,**
**dass** in der vermittels des benutzerseitigen mobilen Kommunikationsgeräts (6) erstellten Umfeldinformation beschriebene gebäudeseitige Objekte (13) im Umfeld um das benutzerseitige mobile Kommunikationsgerät (6) mit in der an das benutzerseitige mobile Kommunikationsgerät (6) übertragenen Karteninformation (KI) beschriebenen gebäudeseitigen Objekten (13) abgeglichen werden.

6. Verfahren nach einem der vorangehenden Ansprüche,
**dadurch gekennzeichnet,**
**dass** eine in einem Gebäudebereich, in welchem keine Netzabdeckung für das benutzerseitige mobile Kommunikationsgerät (6) gegeben ist, liegende erste Position (P1) verwendet wird.

7. Verfahren nach einem der vorangehenden Ansprüche,
**dadurch gekennzeichnet,**
**dass** über das benutzerseitige mobile Kommunikationsgerät (6) eine zusätzliche, zumindest einen Teilbereich des Gebäudes (2) beschreibende Karteninformation bereitgestellt und an das Kraftfahrzeug (8) übertragen wird.

8. Verfahren nach einem der vorangehenden Ansprüche,
**dadurch gekennzeichnet,**
**dass** die Fahrzeugumfeldinformation vermittels wenigstens einer kraftfahrzeugseitigen akustischen und/oder optischen Erfassungssensorik zur Erfassung von Objekten (13) im Umfeld um das Kraftfahrzeug (8) erstellt wird.

9. Verfahren nach einem der vorangehenden Ansprüche,
**dadurch gekennzeichnet,**
**dass** die Navigationsinformation (NI) erste Navigationsdaten, welche wenigstens einen zwischen der ersten Position (P1) und der zweiten Position (P2) innerhalb des Gebäudes (2) liegenden Navigationsroutenabschnitt beschreiben, und weitere Navigationsdaten, welche wenigstens einen zwischen der ersten Position (P1) und der zweiten Position (P2) außerhalb des Gebäudes (2) liegenden Navigationsroutenabschnitt beschreiben, beinhaltet.

10. Verfahren nach Anspruch 9,
**dadurch gekennzeichnet,**
**dass** die weiteren Navigationsdaten durch außerhalb des Gebäudes (2) seitens des mobilen Kommunikationsgeräts (6) über ein außerhalb des Gebäudes (2) bestehendes Kommunikationsnetzwerk (7) bereitstellbare oder bereitgestellte Navigationsdaten ergänzt oder plausibilisiert werden.

11. Verfahren nach Anspruch 9 oder 10,
**dadurch gekennzeichnet,**
**dass** die ersten Navigationsdaten einen Navigationsroutenabschnitt zwischen der ersten Position (P1) und einem gebäudeseitigen Ausgangs- oder Eingangsbereich beschreiben und die weiteren Navigationsdaten einen Navigationsroutenabschnitt zwischen dem oder einem gebäudeseitigen Ausgangs- oder Eingangsbereich und der zweiten Position (P2) beschreiben.

12. System umfassend ein Kraftfahrzeug sowie ein mobiles Kommunikationsgerät, wobei das Kraftfahrzeug und das mobile Kommunikationsgerät zusammen zur Durchführung eines Verfahrens nach einem der vorangehenden Ansprüche ausgebildet sind,
wobei das Kraftfahrzeug (8) eine Steuereinrichtung, eine Sendeeinrichtung und wenigstens eine akustische und/oder optische Erfassungssensorik zur Erfassung von Objekten im Umfeld um das Kraftfahrzeug umfasst, und wobei das mobile Kommunikationsgerät (6) eine Empfangseinrichtung und akustische und/oder optische und/oder haptische Ausgabemittel umfasst.

## Claims

1. Method for navigating a user (1) between a first position (PI) within a building (2), wherein the first position (PI) is a park position of a motor vehicle (8) parked in the building (2), and a second position (P2), or vice versa, **characterised by** the following steps:
- creating, by the motor vehicle (8), map information (KI) describing at least one partial area of the building (2) based on vehicle environment information created at the motor vehicle that describes objects (13) in an environment around the motor vehicle (8),
- providing, by the motor vehicle (8), parking information (PI) including a park position of the motor vehicle (8) within the building (2),
- transferring the map information (KI) and the parking information (PI) from the motor vehicle (8) to a user-side mobile communication device (6),
- creating, by the user-side mobile communication device (6), navigation information (NI) comprising at least one navigation route between the first position and the second position, based on the transferred map information (KI) and the transferred parking information (PI), and
- navigating, by the mobile communication device (6), the user (1) from the first position (PI) to the second position (P2), or vice versa, based on the navigation information (NI), wherein the navigation information (NI) comprises at least one distance to be travelled by the user in order to arrive from the first position (PI) at the second position (P2), or vice versa.

2. Method according to claim 1,
**characterised in that**
building-side objects (13) are extracted from the vehicle environment information and are stored, specially labelled, in the created map information (KI).

3. Method according to claim 2,
**characterised in that**
objects (13) that are structurally inseparable from the building (2) or are connected so as to be separable are described as building-side objects (13).

4. Method according to any of the preceding claims,
**characterised in that**
the user-side mobile communication device (6) creates environment information describing objects (13) in an environment around the user-side mobile communication device (6).

5. Method according to claim 4,
**characterised in that**
building-side objects (13) described in the environment information created by the user-side mobile communication device (6) are matched with building-side objects (13) described in the map information (KI) transferred to the user-side mobile communication device (6) in the environment around the user-side mobile communication device (6).

6. Method according to any of the preceding claims,
**characterised in that**
a first position (PI) which is situated in a building area in which no network coverage is present for the user-side mobile communication device (6) is used.

7. Method according to any of the preceding claims,
**characterised in that**
an additional map information describing at least one partial area of the building (2) is provided by the user-side mobile communication device (6) and is transferred to the motor vehicle (8).

8. Method according to any of the preceding claims,
**characterised in that**
the vehicle environment information is created using at least one motor vehicle-side acoustic and/or optical detection sensor for detecting the objects (13) in the environment around the motor vehicle (8).

9. Method according to any of the preceding claims,
**characterised in that**
the navigation information (NI) comprises first navigation data describing at least one navigation route segment situated between the first position (PI) and the second position (P2) within the building (2), and additional navigation data describing at least one navigation route segment situated between the first position (P1) and the second position (P2) outside of the building (2).

10. Method according to claim 9,
**characterised in that**
the additional navigation data are supplemented or checked for plausibility by navigation data that can be provided or are provided by the mobile communication device (6), outside the building (2), via a communication network (7) existing outside of the building (2).

11. Method according to claim 9 or 10,
**characterised in that**
the first navigation data describe a navigation route segment between the first position (P1) and a building-side exit area or building-side entrance area, and the additional navigation data describe a navigation route segment between the or a building-side exit area or building-side entrance area and the second position (P2).

12. System comprising a motor vehicle and a mobile communication device, wherein the motor vehicle and the mobile communication device are configured to carry out together a method according to any of the preceding claims, wherein the motor vehicle (8) comprises a control device, a transmission device and at least one acoustic and/or optical detection sensor for detecting objects in the environment around the motor vehicle, and wherein the mobile communication device (6) comprises a receiver device and acoustic and/or optical and/or haptic output means.

## Revendications

1. Procédé de navigation d'un utilisateur (1) entre une première position (P1) dans un bâtiment (2), dans lequel la première position (P1) est une position de stationnement d'un véhicule automobile (8) stationné dans le bâtiment (2), et une seconde position (P2) ou inversement, **caractérisé par** les étapes suivantes :
- création d'une information de carte (KI) décrivant au moins une zone partielle du bâtiment (2) du côté du véhicule automobile (8) sur la base d'une information d'environnement de véhicule décrivant des objets (13) dans l'environnement autour du véhicule automobile (8), créée du côté véhicule automobile,
- mise à disposition d'une information de stationnement (P1) contenant une position de stationnement du véhicule automobile (8) dans le bâtiment (2) du côté du véhicule automobile (8),
- transmission de l'information de carte (KI) et de l'information de stationnement (P1) du véhicule automobile (8) à un appareil de communication mobile (6) côté utilisateur,
- création d'une information de navigation (NI) contenant au moins une route de navigation entre la première position et la seconde position sur la base de l'information de carte transmise (KI) et de l'information de stationnement (P1) transmise du côté de l'appareil de communication mobile (6) côté utilisateur et
- navigation de l'utilisateur (1) de la première position (P1) à la seconde position (P2) ou inversement, au moyen de l'appareil de communication mobile (6) sur la base de l'information de navigation (NI), dans lequel l'information de navigation (NI) comporte au moins une distance à parcourir par l'utilisateur afin de parvenir de la première position (P1) à la seconde position (P2) ou inversement.

2. Procédé selon la revendication 1,
**caractérisé en ce que**,
des objets (13) côté bâtiment sont extraits de l'information d'environnement de véhicule et sont enregistrés, caractérisés séparément, dans l'information de carte (KI) créée.

3. Procédé selon la revendication 2,
**caractérisé en ce que**,
des objets (13) reliés de manière séparable ou inséparable constructivement au bâtiment (2) sont décrits comme objets (13) côté bâtiment.

4. Procédé selon l'une quelconque des revendications précédentes,
**caractérisé en ce que**,
l'appareil de communication mobile (6) côté utilisateur crée une information d'environnement décrivant des objets (13) dans l'environnement autour de l'appareil de communication mobile (6) côté utilisateur.

5. Procédé selon la revendication 4,
**caractérisé en ce que**,
des objets (13) côté bâtiment décrits dans l'information d'environnement créée au moyen de l'appareil de communication mobile (6) côté utilisateur dans l'environnement autour de l'appareil de communication mobile (6) côté utilisateur sont comparés avec des objets (13) côté bâtiment décrits dans l'information de carte (KI) transmise à l'appareil de communication mobile (6) côté utilisateur.

6. Procédé selon l'une quelconque des revendications précédentes,
**caractérisé en ce que**,
une première position (P1) se trouvant dans une zone de bâtiment dans laquelle aucune couverture réseau pour l'appareil de communication mobile (6) côté utilisateur n'est donnée, est utilisée.

7. Procédé selon l'une quelconque des revendications précédentes,
**caractérisé en ce que**,
une information de carte supplémentaire décrivant au moins une zone partielle du bâtiment (2), est mise à disposition par l'intermédiaire de l'appareil de communication mobile (6) côté utilisateur et est transmise au véhicule automobile (8).

8. Procédé selon l'une quelconque des revendications précédentes,
**caractérisé en ce que**,
l'information d'environnement de véhicule est créée au moyen d'au moins un système de capteur de détection optique et/ou acoustique côté véhicule automobile pour la détection d'objets (13) dans l'environnement autour du véhicule automobile (8).

9. Procédé selon l'une quelconque des revendications précédentes,
**caractérisé en ce que**,
l'information de navigation (NI) contient des premières données de navigation qui décrivent au moins une section de route de navigation se trouvant entre la première position (P1) et la seconde position (P2) dans le bâtiment (2), et d'autres données de navigation qui décrivent au moins une section de route de navigation se trouvant entre la première position (P1) et la seconde position (P2) en dehors du bâtiment (2).

10. Procédé selon la revendication 9,
**caractérisé en ce que**,
les autres données de navigation sont complétées ou soumises à un contrôle de plausibilité par des données de navigation pouvant être mises à disposition ou étant mises à disposition en dehors du bâtiment (2) du côté de l'appareil de communication mobile (6) par l'intermédiaire d'un réseau de communication (7) existant en dehors du bâtiment (2).

11. Procédé selon la revendication 9 ou 10,
**caractérisé en ce que**,
les premières données de navigation décrivent une section de route de navigation entre la première position (P1) et une zone de sortie ou d'entrée côté bâtiment et les autres données de navigation décrivent une section de route de navigation entre la ou une zone de sortie ou d'entrée côté bâtiment et la seconde position (P2).

12. Système comprenant un véhicule automobile ainsi qu'un appareil de communication mobile, dans lequel le véhicule automobile et l'appareil de communication mobile sont réalisés ensemble pour la réalisation d'un procédé selon l'une quelconque des revendications précédentes,
dans lequel le véhicule automobile (8) comporte un dispositif de commande, un dispositif d'émission et au moins un système de capteur de détection acoustique et/ou optique pour la détection d'objets dans l'environnement autour du véhicule automobile, et dans lequel l'appareil de communication mobile (6) comporte un dispositif de réception et des moyens de sortie acoustiques et/ou optiques et/ou haptiques.
